Europäisches Patentamt

European Patent Office

Office européen des brevets

(11) Publication number: **0 123 965**
**A2**

# EUROPEAN PATENT APPLICATION

(21) Application number: **84103859.9**

(22) Date of filing: **06.04.84**

(51) Int. Cl.³: **B 32 B 27/12**

(30) Priority: **03.05.83 US 491097**

(43) Date of publication of application: **07.11.84**
**Bulletin 84/45**

(84) Designated Contracting States: **AT BE CH DE FR GB IT LI LU NL SE**

(71) Applicant: **W.L. GORE & ASSOCIATES, INC., 555 Paper Mill Road P.O. Box 9329, Newark Delaware 19711 (US)**

(72) Inventor: **Brinton, Samuel J., 9253 Hickory Hill Road, Oxford Pennsylvania 19363 (US)**

(74) Representative: **Taylor, Derek George et al, MATHISEN, MACARA & CO. European Patent Attorneys Lyon House Lyon Road, Harrow Middlesex, HA1 2ET (GB)**

(54) **Porous static electric charge dissipative laminate.**

(57) The invention concerns a laminate for use in a garment for a clean room environment where formation of static charge on clothing worn by a worker in the clean room may deleteriously affect work being conducted therein. The laminate has a high rate of water vapour transmission, thus providing a comfortable garment, blocks transmission of bacteria and submicron size particles, sheds particles, and does not form particles itself. The laminate comprises a layer of porous polymeric film and adhesively bonded to it an electrically conductive textile fabric capable of dissipating static electric charge. The preferred porous polymer layer is of expanded polytetrafluoroethylene. The preferred electrically conductive textile fabric has a sufficient content of fibres containing electrically conductive carbon particles to dissipate static electric charges.

POROUS STATIC ELECTRIC CHARGE

DISSIPATIVE LAMINATE"

This invention relates to a composite layered article in sheet form which is porous and has sufficient electrical conductivity to render the article capable of dissipating static electric charges on its surface.

There is a need for a sheet material suitable for use in garments for wear in clean rooms, where formation of static charges on clothing worn by workers may deleteriously affect work being conducted therein. As a particular example, garments have been needed by various industries working in clean room environments which are comfortable to wear, which are barriers to bacteria and submicron particles and which rapidly dissipate static electric charges which may form on them.

The barrier is needed to prevent bacteria or possibly toxic particles from the work environment from passing through the garment from outside to inside as well as retain any particles carried by the worker inside the barrier to avoid contamination of a work environment sensitive to them outside the barrier. The barrier should also allow rapid evaporation of body moisture through it so that the garment will be comfortable to wear. The static electric charge dissipation property is needed in that charges attract contaminating particles to a garment. Also discharge of such a static charge at a work site or the proximity of an electrostatic field could be harmful if the garment was being worn during manufacture or assembly at that site of delicate electronic, computer, or other equipment subject to damage by static electric discharge.

According to the present invention, there is provided a composite article comprising a layer of porous polymeric film adhesively bonded to a layer of textile fabric containing electrically conductive fibres.

In a garment, the porous polymeric film will normally be an outer layer with respect to the textile fabric and for ease of reference the terms 'outer' and 'inner' will be used hereinafter in relation to these layers of the composite article.

The outer layer of the layered composite preferably comprises a smooth layer which does not generate particles under normal friction and will transmit water vapour at the rate of at least 1000 g/m$^2$/day and preferably at a rate exceeding 2000 g/m$^2$/day and is preferably, though not necessarily, formed from a porous hydrophobic polymer having an advancing water contact angle exceeding 90 degrees.

The inner layer of the layered composite comprises a conductive textile layer which is adhesively bonded to the outer layer. The conductive textile will preferably be any of a number of electrically conductive and inherently antistatic textiles known in the art which meet or exceed the National Fire Protection Association Code 56A standards of static charge decay time or surface resistivity for rating as static dissipative and which are wash durable as to antistatic or conductive properties when adhesively bonded to the outer layer.

In a preferred embodiment of the invention, the outer layer of the layered composite comprises a polymeric membrane which has a smooth surface and is sufficiently porous to transmit water vapour readily, but does not have pores large enough to allow passage through it of submicron size particles and bacteria. Polymeric films or membranes of the requisite porosity made from polyvinyl chloride, polyurethane, poly acrylate esters, and poly fluoroethylenes are known in the art. The preferred polymeric materials for use as the outer layer of the composite are porous membranes comprising expanded polytetrafluoroethylene which are disclosed in U.S. Patents 3,953,566, 4,187,390 and 3,962,153. These membranes are hydrophobic, porous, and have a water vapour transmission rate through the membrane exceeding 1000 $g/m^2$/day and preferably exceeding 2000 $g/m^2$/day, a rate which is desirable for a layered composite useful for application as a clean room garment which should be comfortable to wear when worn for long periods of time, such as a work shift in a clean room environment.

The preferred membranes have a smooth surface such that particles tend not to cling to the surface, the surface does not form particles or lint under conditions of friction normal to use of the composite embodying the membrane in a garment, and have been found to block the passage of bacteria and submicron size particles. Thus, bacteria or fine particles will not pass outside the garment from the wearer to the clean room environment or pass from the clean room environment through the garment to the wearer. These properties make such garments useful in biological hazard clean rooms and for use in sterile environments such as hospital operating rooms and pharmaceutical production areas as well as in rooms where static electricity discharge sensitive or electrostatic field sensitive apparatus and parts are being manufactured or assembled.

In cases where abrasion resistance is more valuable than the non-linting surface property, an additional textile layer may be bonded to the polymeric membrane. Preferred textile fabrics are abrasion reisistant and relatively non-linting fabrics, such as woven or knit fabrics of monofilament polyester.

The inner layer of the composite comprises an inherently static-free textile fabric which is sufficiently conductive to drain away any static charges which may be formed on a surface of the composite of which the fabric is a part and whose antistatic properties are permanent and durable for the number of wash cycles needed to provide a normal lite cycle for the fabric.

A wide variety of conductive fibres may be used to form the inner layer of the composite. They are used in admixture with nonconductive natural and synthetic fibres in proportion to give a finished fabric of conductivity in the desired range. Suitable fibres may contain internal additives such as polyoxyalkylated compounds, metal salts or salts of amphoteric organic compounds, such as those described in U.S. Patents 3,475,898, 3,329,557, 3,507,935, 3,341,627 or by Marumo, The Internal Antistatic Treatment of Thermoplastic Polymers, in a paper presented at tne first International Congress of Static Electricity, Vienna, Austria, May 3-7, 1970.

Fibres containing in some form conductive carbon black or metal may be used. Natural or synthetic organic fibres coated with carbon black or metal particles or coated with vacuum evaporated or chemically plated metal and then top-coated with a layer of organic polymer are described in U.S. Patent 3,582,442. Continuous conductive carbon filaments sheathed in synthetic organic polymer, such as acrylic, cellulosic, polyolefin, polyamide, polyester, polystyrene polymers and acrylonitrile copolymers, as described in U.S. Patents 4,045,949 and 3,803,453 are useful as are the continuous metal fibres used in U.S. Patent 3,288,175 and the metal plated fibres disclosed in U.S. Patent 3,014,818 and continuous conductive graphite fibres.

The conductive fibres are blended with substantial quantities of non-conductive natural or synthetic organic fibres by methods well known in the textile arts to yield yarns and fabrics of conductivity sufficient that when the fabric is adhesively bonded to the porous outer polymeric membrane that the composite as a whole will dissipate static electric charges under the conditions of the N.F.P.A. Code 56A tests for static decay, which specifies a static decay time of 0.5 second or less for a 5000 volt static electric charge on the surface to 50 volts as measured by the Federal Test Method Standard 101B Method 4046.

It is additionally desirable that the textile fabric not be woven so tightly as to restrict the flow of water vapour through the fabric. Commerical woven fabrics and knits made from cotton, polyester, polyamide, acrylics, acrylonitrile copolymers, and their blends and other fibres having a water vapour permeability of 1000 to 4000 or more $g/m^2/day$ are well known and can be used as the lower textile layer of the composite of the invention. Preferred fabrics are open-weave knits and woven texturised polyester and polyester-cotton blends.

The porous polymeric film layer and the conductive textile layer are united into a layered composite by printing on the surfaces to be united a discontinuous pattern of commercial isocyanate-cured polyester adhesive by means of a simple gravure roll or other commonly used method of printing adhesive, then uniting the layers under sufficient heat and pressure by means of, for instance, nip rolls to assure a permanent bond of the two layers. The adhesive pattern is applied in such a way to prevent formation of a continuous adhesive layer between the two plies and a relatively large percentage of the surfaces of the two plies are adhesive-free and hence readily moisture permeable. The assembled layered composite is soft, pliable, and suitable for use in garments for continuous comfortable wear in clean rooms as described above.

The following examples illustrate embodiments of the invention.

EXAMPLE I

Porous expanded polytetrafluoroethylene (PTFE) film, as described in U.S. Patents 3,953,566 and 4,194,041, was printed by a gravure roll process with a spaced pattern of dots of commercial isocyanate-cured polyester adhesive and laminated by nip roll pressure and heat to a polyester fabric containing carbon impregnated polyamide textile fibres. A ten metre piece of this composite was then washed for 50 hours, sample pieces taken for static electric charge decay testing, and the remainder of the composite washed to failure of the laminate (651 hours).

EXAMPLE II

PTFE film of Example I was laminated by the method of Example I to a polyester open knit fabric containing conductive carbon fibres. The composite was durable after washing for 720 hours. The moisture vapour transmission rate was above 2000 g/m$^2$/day.

EXAMPLE III

PTFE film of Example I was laminated by the method of Example I to a polyester open knit fabric containing conductive carbon fibres on a 5/8 inch (1.6cms) spacing. The composite was durable to 720 hours washing. The moisture vapour transmission rate was above 2000 g/m$^2$/day.

TABLE I

| Example Number | Surface Tested | Other Layer Of Laminate | Decay Time In Seconds 5000-50 volts |
|---|---|---|---|
| I | PTFE | Fabric | 0.10, 0,05 |
| I | Fabric | PTFE | 0.05, 0.05 |
| II | Fabric | PTFE | <0.1 |
| II | PTFE | Fabric | <0.1 |
| III | PTFE | Fabric | 0.15 |

It was well known that the introduction of carbon or other conductive material containing fibres into fabric greatly reduced the static electric charge decay time and surface resistance, but it was unexpected that when a polymeric film was laminated to such a fabric that the polymeric film surface would also have a reduced static electric charge decay time. It appears that the conductive properties of the surface may determine surface resistivity while the properties of the entire composite affect static electric charge decay time.

Although reference has been made to inner and outer layers of the composite, the use of these terms is not intended to preclude the provision of other layers attached to the inside or outside of the composite.

8306:B:2JJK8

0123965

## CLAIMS

1.     A composite article comprising a layer of porous polymeric film adhesively bonded to a layer of textile fabric characterised by said textile fabric containing electrically conductive fibres.

2.     A composite article according to claim 1, characterised in that said layer of textile fabric contains sufficient electrically conductive fibre to render the composite article permanently capable of dissipating static electric charges.

3.     A composite article according to claim 1 or claim 2 characterised in that the porous polymeric film layer consists essentially of expanded polytetrafluoroethylene.

4.     A composite article according to any preceding claim characterised in that the adhesive bonding is discontinuous.

5.     A composite article according to any preceding claim characterised in that the electrically conductive fibres contain a form of conductive carbon.

6.     A composite article according to any preceding

13

0123965

claim characterised in that an additional textile fabric layer is adhesively bonded to the porous polymeric layer.

7. An article of clothing manufactured from the composite article claimed in any preceding claim.

8306:B:2JJK10